# EUROPEAN PATENT APPLICATION

(11) **EP 4 711 066 A1**
(43) Date of publication of application: **18.03.2026**
(21) Application number: 25192719.0
(22) Date of filing: 30.07.2025
(51) Int. Cl.: B23K 11/11, B23K 11/31, B23K 20/12

(54) **GUN ARM AND JOINING APPARATUS**

(30) Priority: 05.09.2024 JP 2024153355
(71) Applicant: DAIHEN Corporation, Yodogawa-ku Osaka-shi, Osaka 532-8512 (JP)
(72) Inventor: TAKEI, Yuko, Osaka-shi, Osaka, 532-8512 (JP)
(74) Representative: Hoffmann Eitle

(57) **Abstract**

The present application relates to a gun arm (100) which includes an inner frame portion (110), an outer frame portion (120), and beams (131 to 140). The inner frame portion (110) includes a base portion (111) and a first extension portion (112) and a second extension portion (113), the first extension portion (112) and the second extension portion (113) extending from one end and the other end in a first direction thereof, in a second direction, respectively. When viewed from a third direction orthogonal to the first and second directions, each of the beams (131 to 140) extends away in the first direction from a central portion (C) of the base portion (111) in the first direction, from a side of the inner frame portion (110) toward the outer frame portion (120). When viewed from the third direction, an angle of an acute angle formed by a direction of extension of each of the beams (131 to 140) with respect to the base portion (111) is smaller as an intersection (c1 to c10) between the direction of extension and the base portion (111) is more distant from the central portion (C) in the first direction.

## Description

### CROSS REFERENCE TO RELATED APPLICATIONS

This nonprovisional application is based on Japanese Patent Application No. 2024-153355 filed with the Japan Patent Office on September 5, 2024, the entire contents of which are hereby incorporated by reference.

### BACKGROUND OF THE INVENTION

### Field of the Invention

The present invention relates to a gun arm and a joining apparatus including the same.

### Description of the Background Art

Various methods of joining a plurality of objects to be joined have conventionally been known. For example, Japanese Patent Laying-Open No. 2014-168805 discloses a joining apparatus for friction stir welding representing one example of the methods. In addition, WO2021/182444 discloses a joining apparatus for solid-phase resistance spot joining representing another example of the methods. Each of these joining apparatuses includes a pair of joining units coaxially arranged as being opposed to each other, the joining units being configured to press a plurality of objects to be joined as sandwiching the objects therebetween.

From a point of view of improvement in work efficiency in these joining methods, as disclosed, for example, in Japanese Patent Laying-Open No. 2014-168805, a robot arm may be applied to the joining apparatus. In this case, the robot arm is coupled to a gun arm to which the pair of joining units is attached.

### SUMMARY OF THE INVENTION

In order to secure quality of joint in the various joining methods described above, it is important to coaxially arrange the pair of joining units without misalignment.

In this regard, when the pair of joining units press objects to be joined to apply a load thereto, reactive force of this load is applied to the gun arm. When the gun arm is deflected by reactive force, the pair of joining units may be misaligned and consequently quality of joint may be lowered.

This problem is particularly noticeable when solid-phase resistance spot joining is performed which tends to be larger in load applied to the objects to be joined than other joining methods or when the gun arm is formed from a frame or decreased in thickness for the purpose of reduction in weight of the joining apparatus.

Therefore, the present invention was made to solve the problems described above, and an object thereof is to provide a gun arm that achieves improvement in rigidity while it achieves reduction in weight and a joining apparatus including the same.

To a gun arm based on the present invention, a first joining unit and a second joining unit are attachable as being opposed to each other in a first direction, the first joining unit and the second joining unit being configured to press a plurality of overlaid objects to be joined as sandwiching the objects therebetween. The gun arm based on the present invention includes an inner frame portion that defines an inner peripheral portion, an outer frame portion that defines an outer peripheral portion, and a plurality of beams that connect the inner frame portion and the outer frame portion to each other. The inner frame portion includes a base portion, a first extension portion, and a second extension portion. The base portion extends along the first direction. The first extension portion extends from one end in the first direction of the base portion, along a second direction intersecting with the first direction. The second extension portion extends along the second direction from the other end in the first direction of the base portion, and is arranged as being opposed to the first extension portion at a distance in the first direction. When viewed from a third direction orthogonal to the first direction and the second direction, each of the plurality of beams extends away in the first direction from a central portion of the base portion in the first direction, from a side of the inner frame portion toward the outer frame portion. When viewed from the third direction, an angle of an acute angle formed by a direction of extension of each of the plurality of beams with respect to the base portion is smaller as an intersection between the direction of extension and the base portion is more distant from the central portion in the first direction.

According to such a configuration, the gun arm that achieves improvement in rigidity while it achieves reduction in weight can be provided.

In the gun arm based on the present invention, a portion surrounded by two beams adjacent to each other among the plurality of beams and the inner frame portion and the outer frame portion may be a hole that passes through in the third direction.

According to such a configuration, further reduction in weight of the gun arm can be achieved.

In the gun arm based on the present invention, when viewed from the third direction, the plurality of beams may increase in thickness from the side of the inner frame portion toward the outer frame portion.

According to such a configuration, rigidity of a portion of the gun arm on a side of the outer frame portion can be improved.

In the gun arm based on the present invention, a robot arm may be coupled at a center in the first direction.

According to such a configuration, a difference between an amount of deflection caused in a portion of the gun arm located above the center in the first direction and an amount of deflection caused in a portion of the gun arm located below at the time of joint of the plurality of objects to be joined can be reduced.

A joining apparatus based on the present invention includes the gun arm based on the present invention described above and the first joining unit and the second joining unit.

According to such a configuration, the joining apparatus including the gun arm that achieves improvement in rigidity while it achieves reduction in weight can be provided.

The joining apparatus based on the present invention may be used for solid-phase resistance spot joining. According to such a configuration, solid-phase resistance spot joining can be performed.

In the joining apparatus based on the present invention, the first joining unit may include a first pressurization shaft that presses the plurality of objects to be joined in a plastically deformable manner and a first electrode arranged around the first pressurization shaft and applying a voltage to the plurality of objects to be joined. The second joining unit may include a second pressurization shaft that presses the plurality of objects to be joined in a plastically deformable manner and a second electrode arranged around the second pressurization shaft and applying a voltage to the plurality of objects to be joined. According to such a configuration, solid-phase resistance spot joining can be performed.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a schematic diagram generally showing a joining apparatus according to a first embodiment.
Fig. 2 is a schematic cross-sectional view generally showing a state in the vicinity of an object to be joined at the time of solid-phase resistance spot joining.
Figs. 3A to 3F are a front view, a rear view, a left side view, a right side view, a plan view, and a bottom view of a gun arm to which a first joining unit and a second joining unit have been attached, respectively.
Fig. 4 is a schematic front view for illustrating a detailed configuration of the gun arm shown in Figs. 3A to 3F.
Fig. 5 is a perspective view of a simulation model in Example 1.
Figs. 6A to 6F are a front view, a rear view, a left side view, a right side view, a plan view, and a bottom view of a gun arm in Example 1, respectively.
Fig. 7 is a perspective view of the gun arm in Example 1.
Figs. 8A to 8F are a front view, a rear view, a left side view, a right side view, a plan view, and a bottom view of a gun arm in Comparative Example 1, respectively.
Fig. 9 is a perspective view of the gun arm in Comparative Example 1.
Figs. 10A and 10B are front views showing distributions of displacement in a Z-axis direction in the gun arms in Example 1 and Comparative Example 1, respectively.
Fig. 11 shows a table showing an amount of displacement in the Z-axis direction at a prescribed position of the gun arm in each of Example 1 and Comparative Example 1.
Figs. 12A to 12B are front views showing distributions of stress in the gun arms in Example 1 and Comparative Example 1, respectively.
Figs. 13A to 13F are a front view, a rear view, a left side view, a right side view, a plan view, and a bottom view of a gun arm in Example 2, respectively.
Fig. 14 is a perspective view of the gun arm in Example 2.
Figs. 15A to 15F are a front view, a rear view, a left side view, a right side view, a plan view, and a bottom view of a gun arm in Example 3, respectively.
Fig. 16 is a perspective view of the gun arm in Example 3.
Fig. 17 is a schematic diagram generally showing a joining apparatus according to a fourth embodiment.

### DESCRIPTION OF THE PREFERRED EMBODIMENTS

An embodiment of the present disclosure will be described in detail below with reference to the drawings. In the embodiment shown below, the same or common elements have the same reference characters allotted in the drawings and description thereof will not be repeated. In the embodiment of the present invention below, a gun arm to be used for solid-phase resistance spot joining and a joining apparatus including the same are illustrated and described.

### (First Embodiment)

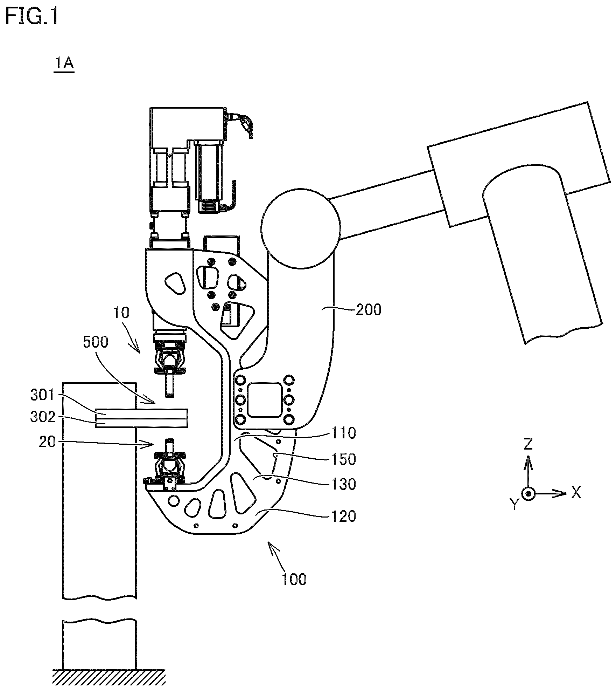

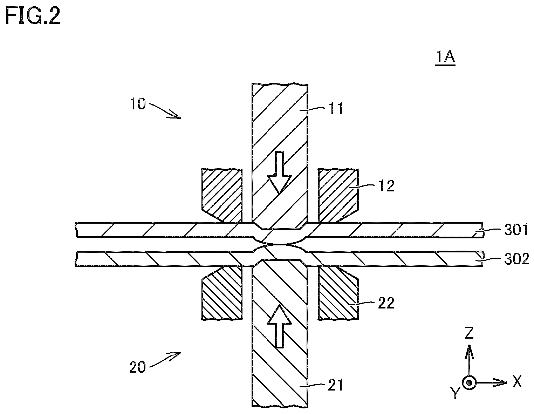

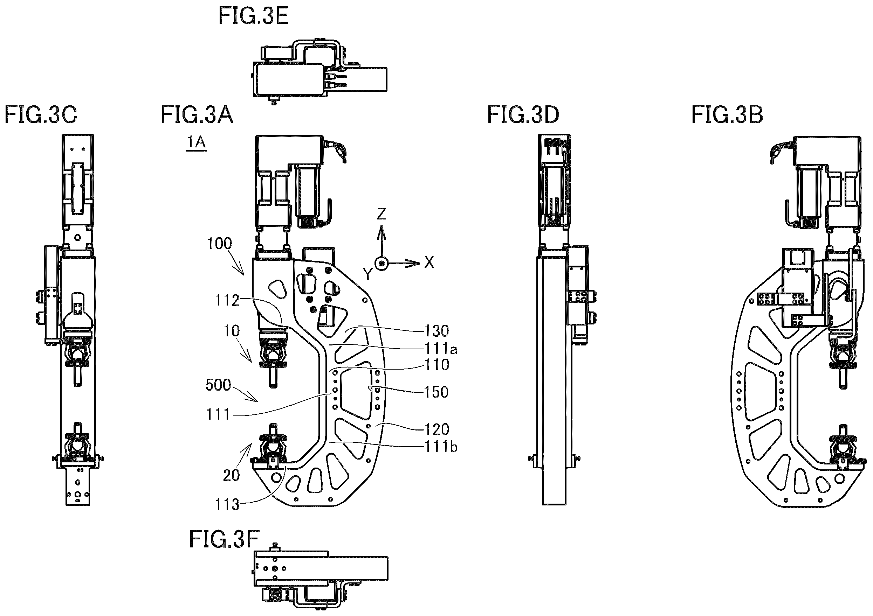

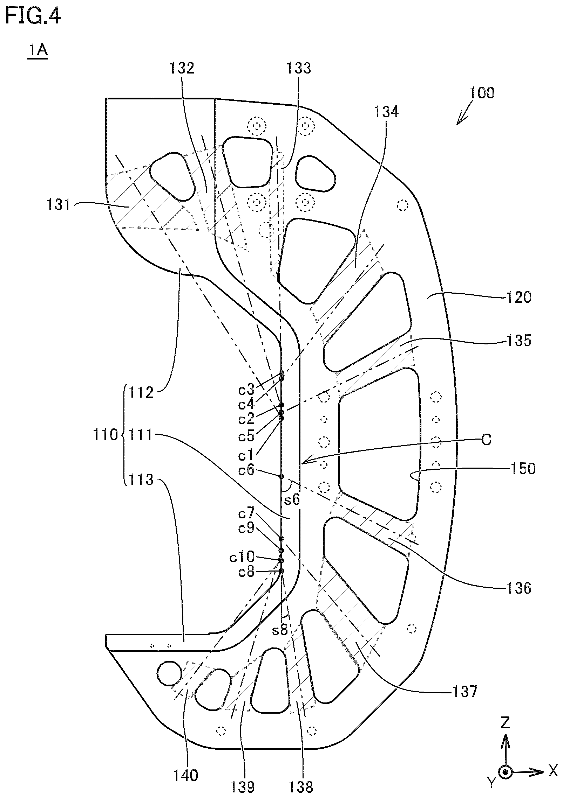

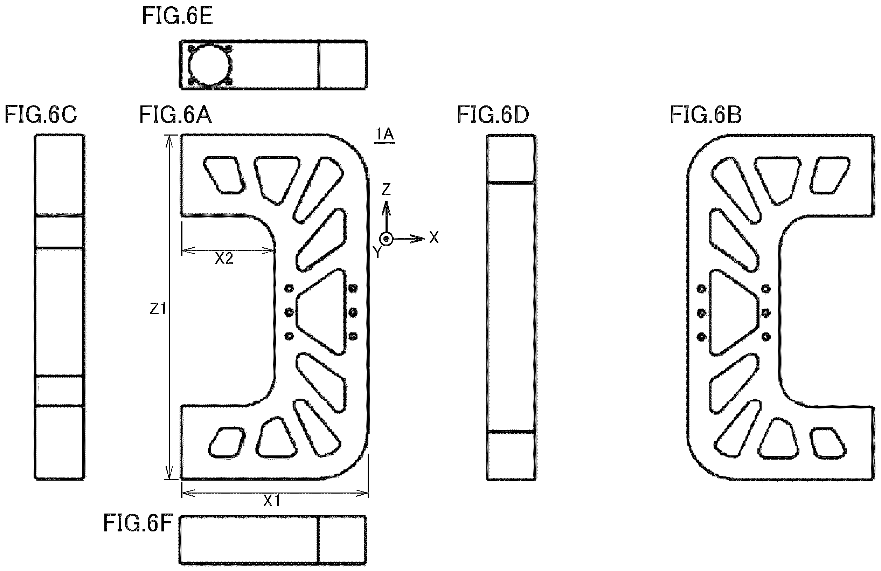

Fig. 1 is a schematic diagram generally showing a joining apparatus according to a first embodiment. Fig. 2 is a schematic cross-sectional view generally showing a state in the vicinity of an object to be joined at the time of solid-phase resistance spot joining. Figs. 3A to 3F are a six-view drawing of a gun arm to which a first joining unit and a second joining unit have been attached. Specifically, Figs. 3A to 3F are a front view, a rear view, a left side view, a right side view, a plan view, and a bottom view of the gun arm, respectively (Figs. 6A to 6F, Figs. 8A to 8F, Figs. 13A to 13F, and Figs. 15A to 15F which will be described later are also similar). Fig. 4 is a schematic front view for illustrating a detailed configuration of the gun arm shown in Figs. 3A to 3F . An overall configuration of a gun arm 100 according to the present embodiment and a joining apparatus 1A including the same will be described below with reference to Figs. 1 to 4.

In the description below, as shown in Fig. 1, a lateral direction when gun arm 100 is viewed from the front is also referred to as an X-axis direction. A front-rear direction when gun arm 100 is viewed from the front is also referred to as a Y-axis direction. Furthermore, an upward-downward direction when gun arm 100 is viewed from the front is also referred to as a Z-axis direction.

Joining apparatus 1A is an apparatus used for what is called solid-phase resistance spot joining in which a plurality of objects to be joined are joined in a solid-phase state in a low-temperature region without being molten. Specifically, while joining apparatus 1A forms softened regions in the plurality of overlaid objects to be joined by applying a voltage thereto, it plastically deforms the softened regions by applying a load to the plurality of objects to be joined where the softened regions have been formed.

In the present embodiment, objects to be joined 301 and 302 in a form of a plate are joined to each other by joining apparatus 1A. The number of objects to be joined is not particularly limited to two, and may be set to three or more.

Object to be joined 301, 302 is formed from a steel plate such as a high tensile strength steel plate. Object to be joined 301, 302 is not particularly limited to an object formed from the steel plate and may be formed from an aluminum plate or the like. Object to be joined 301, 302 may be formed from materials different from each other in type such as a steel plate and an aluminum plate.

As shown in Figs. 1, 2, and 3A to 3F, joining apparatus 1A includes a first joining unit 10, a second joining unit 20, a gun arm 100, and a robot arm 200. First joining unit 10 and second joining unit 20 are configured to press a plurality of overlaid objects to be joined as sandwiching the objects therebetween.

First joining unit 10 includes a first pressurization shaft 11 and a first electrode 12. First joining unit 10 is driven in the Z-axis direction by a drive apparatus such as a servo press (not shown). First joining unit 10 is supplied with electric power from a not-shown power supply (not shown).

In the present embodiment, a first direction corresponds to the Z-axis direction. A second direction intersecting with the first direction corresponds to the X-axis direction. A third direction orthogonal to the first direction and the second direction corresponds to the Y-axis direction.

First pressurization shaft 11 includes a portion substantially in a columnar shape. First pressurization shaft 11 is configured to plastically deform overlaid objects to be joined 301 and 302 by pressing them along the Z-axis direction.

First electrode 12 includes a portion substantially in a cylindrical shape. First electrode 12 is arranged around first pressurization shaft 11 as being located at a distance from first pressurization shaft 11 in a radial direction. First electrode 12 is configured to apply a voltage to objects to be joined 301 and 302.

Second joining unit 20 includes a second pressurization shaft 21 and a second electrode 22. Second joining unit 20 is supplied with electric power from a not-shown power supply (not shown).

Second pressurization shaft 21 includes a portion substantially in a columnar shape. Second pressurization shaft 21 is configured to plastically deform overlaid objects to be joined 301 and 302 by pressing them along the Z-axis direction.

Second electrode 22 includes a portion substantially in a cylindrical shape. Second electrode 22 is arranged around second pressurization shaft 21 as being located at a distance from second pressurization shaft 21 in the radial direction. Second electrode 22 is configured to apply a voltage to objects to be joined 301 and 302.

A material for first pressurization shaft 11 and second pressurization shaft 21 is, for example, tungsten carbide. The material for first pressurization shaft 11 and second pressurization shaft 21 is not particularly limited to tungsten carbide so long as objects to be joined 301 and 302 can be pressed in the plastically deformable manner, and tool steel, heat-resisting steel, ceramic, or the like may be adopted. A material for first electrode 12 and second electrode 22 is, for example, copper.

By being attached to gun arm 100, first joining unit 10 and second joining unit 20 are coaxially located as being opposed to each other in the Z-axis direction.

As shown in Figs. 1 and 3A to 3F, gun arm 100 includes an inner frame portion 110, an outer frame portion 120, and a plurality of beams 130. Inner frame portion 110 and outer frame portion 120 are substantially in a C shape when viewed from the Y-axis direction. Inner frame portion 110 defines an inner peripheral portion of gun arm 100. Outer frame portion 120 defines an outer peripheral portion of gun arm 100.

Inner frame portion 110 includes a base portion 111, a first extension portion 112, and a second extension portion 113. Base portion 111 extends along the Z-axis direction. First extension portion 112 extends along the X-axis direction from one end 111a in the Z-axis direction of base portion 111. Second extension portion 113 extends along the X-axis direction from the other end 111b in the Z-axis direction of base portion 111. First extension portion 112 and second extension portion 113 are arranged as being opposed to each other at a distance in the Z-axis direction. Directions of extension of first extension portion 112 and second extension portion 113 do not necessarily have to coincide with the X-axis direction but the first extension portion and the second extension portion may extend along a direction inclined as appropriate with respect to the X-axis direction.

First joining unit 10 is located as projecting from first extension portion 112 such that a tip end thereof faces second extension portion 113. Second joining unit 20 is located as projecting from second extension portion 113 such that a tip end thereof faces first extension portion 112.

Thus, at a position between first extension portion 112 and second extension portion 113, a joint space 500 which is a space where objects to be joined 301 and 302 are joined to each other by first joining unit 10 and second joining unit 20 is provided.

First joining unit 10 is driven in the Z-axis direction by the drive apparatus as described above. First joining unit 10 is thus configured as being movable relatively to second joining unit 20 along the Z-axis direction.

Outer frame portion 120 is arranged at a distance from inner frame portion 110 at a position opposite to joint space 500 when viewed from inner frame portion 110.

The plurality of beams 130 connect inner frame portion 110 and outer frame portion 120 to each other by being located as bridging therebetween. In the present embodiment, gun arm 100 includes ten beams 130. Beams 130 will be described later in detail.

At least a part of a portion of gun arm 100 surrounded by two beams 130 adjacent to each other among the plurality of beams 130 and inner frame portion 110 and outer frame portion 120 is a hole 150 that passes through in the Y-axis direction. By thus providing a plurality of holes 150 in the entire gun arm 100, gun arm 100 can be reduced in weight. In the present embodiment, gun arm 100 includes eleven holes 150.

Gun arm 100 is made from a formed product composed of a metallic material such as aluminum, an aluminum alloy, or stainless steel. Gun arm 100 is formed by cutting or the like of a metallic member in a form of a plate adopted as a source material.

Robot arm 200 is coupled to gun arm 100. In the present embodiment, an end effector of robot arm 200 is coupled at the center in the Z-axis direction of gun arm 100. Thus, a difference between an amount of deflection caused in a portion of gun arm 100 located above the center in the Z-axis direction and an amount of deflection caused in a portion of gun arm 100 located below at the time of solid-phase resistance spot joining can be reduced.

A method of fixing the end effector to gun arm 100 is not particularly restricted. In the present embodiment, a portion on a front side of the end effector is fixed to a portion on a front side of gun arm 100 with six bolts and a portion on a rear side of the end effector is fixed to a portion on a rear side of gun arm 100 with six bolts.

For example, a vertical articulated robot arm with six degrees of freedom is employed as robot arm 200. Gun arm 100 is thus configured as being movable in a desired direction in a desired posture by robot arm 200. The degree of freedom of robot arm 200 is not particularly restricted to six degrees of freedom, and may be modified as appropriate to achieve desired performance. An operation of robot arm 200 is controlled, for example, by a control device (not shown).

As shown in Fig. 2, in joining objects to be joined 301 and 302 to each other with joining apparatus 1A, initially, first pressurization shaft 11 and second pressurization shaft 21 sandwich objects to be joined 301 and 302 therebetween in the Z-axis direction to press objects to be joined 301 and 302 from opposing sides. Thus, in objects to be joined 301 and 302, projections that come in contact with each other are formed. Force applied to objects to be joined 301 and 302 by first pressurization shaft 11 and second pressurization shaft 21 is, for example, from 30 kN to 70 kN.

While force is applied to objects to be joined 301 and 302, first electrode 12 and second electrode 22 are then brought in contact with objects to be joined 301 and 302 to apply a voltage to objects to be joined 301 and 302. As objects to be joined 301 and 302 are thus heated, a softened region is formed in each projection and the projections are joined to each other at the softened regions. A current fed to objects to be joined 301 and 302 is, for example, from 3.5 kA to 10 kA.

Fig. 4 is a schematic front view for illustrating a detailed configuration of the gun arm shown in Figs. 3A to 3F . A detailed configuration of beam 130 of gun arm 100 included in joining apparatus 1A according to the present embodiment will be described below with reference to Fig. 4.

In Fig. 4, reference numerals 131 to 140 are provided to ten beams sequentially clockwise from the beam projecting from the tip end of first extension portion 112, and approximate regions where beams 131 to 140 are located are shown with hatching for facilitated understanding. Intersections between directions of extension of beams 131 to 140 and base portion 111 are shown as intersections c1 to c10, respectively. Furthermore, among angles of acute angles formed between the directions of extension of beams 131 to 140 and base portion 111, the angle of the acute angle formed between the direction of extension of beam 136 and base portion 111 is shown as an angle s6 and the angle of the acute angle formed between the direction of extension of beam 138 and base portion 111 is shown as an angle s8 by way of example.

As shown in Fig. 4, gun arm 100 includes inner frame portion 110, outer frame portion 120, and beams 131 to 140. As gun arm 100 is configured by connection of inner frame portion 110 and outer frame portion 120 to each other with beams 131 to 140, it can be lighter in weight, for example, than a gun arm in a form of a plate uniform in thickness in its entirety.

When viewed from the Y-axis direction, each of beams 134 to 137 increases in thickness from a side of inner frame portion 110 toward outer frame portion 120. Rigidity in a portion of gun arm 100 on the side of outer frame portion 120 can thus be improved.

When viewed from the Y-axis direction, each of beams 131 to 140 extends away in the Z-axis direction from central portion C of base portion 111 in the Z-axis direction, from the side of inner frame portion 110 toward outer frame portion 120.

When viewed from the Y-axis direction, the angle of the acute angle formed by the direction of extension of each of beams 131 to 140 with respect to base portion 111 is smaller as the intersection between the direction of extension and base portion 111 of inner frame portion 110 (more specifically, an edge of base portion 111) is more distant in the Z-axis direction from central portion C of base portion 111.

Specifically, intersections c1 to c10 are arranged in the order of intersection c8, intersection c10, intersection c3, intersection c9, intersection c4, intersection c7, intersection c2, intersection c5, intersection c1, and intersection c6, from the intersection located most distant in the Z-axis direction from central portion C of base portion 111. Therefore, in the present embodiment, among the angles of the acute angles corresponding to the directions of extension of beams 131 to 140, angle s6 is largest and angle s8 is smallest.

According to such a configuration, gun arm 100 that achieves improvement in rigidity while it achieves reduction in weight can be provided. This aspect will be described below with reference to a result of simulation analysis with a finite element method (FEM).

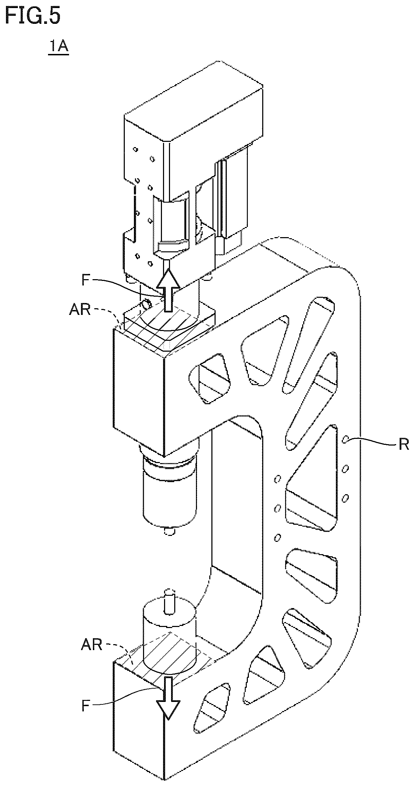

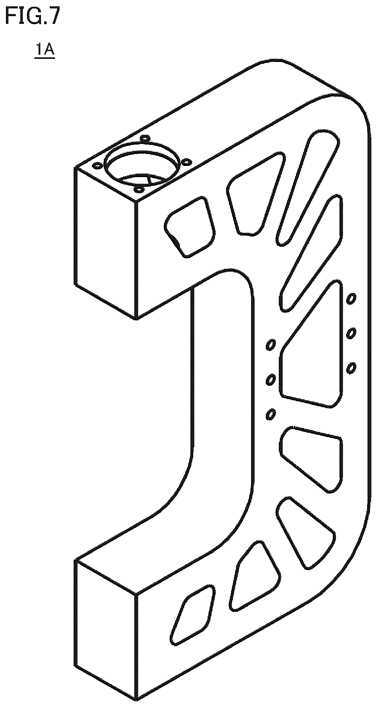

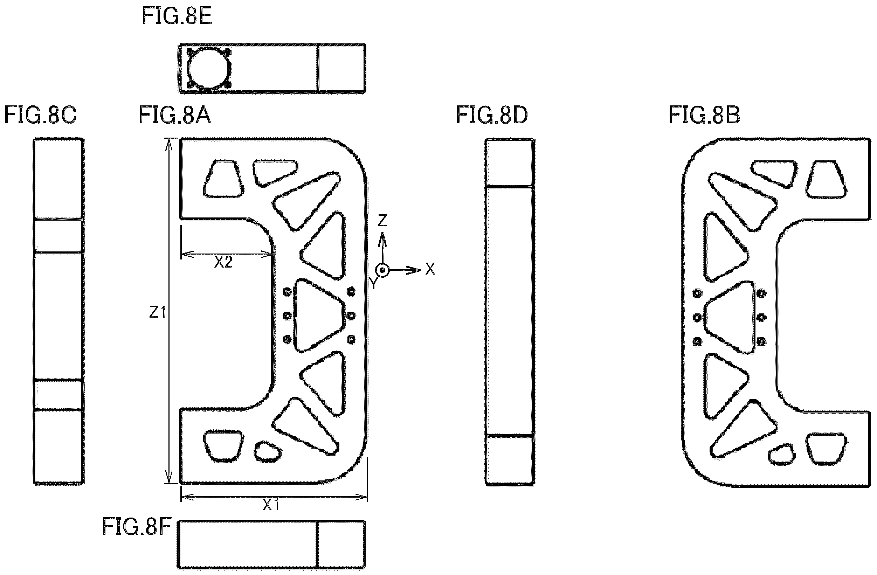

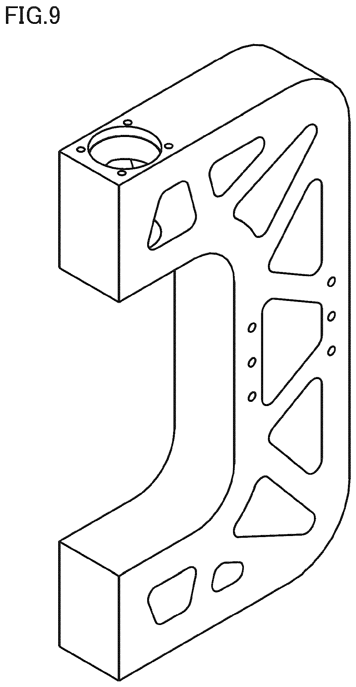

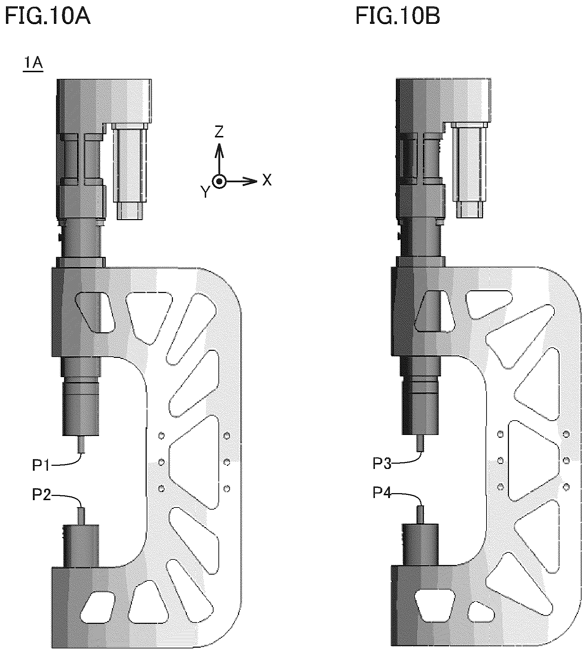

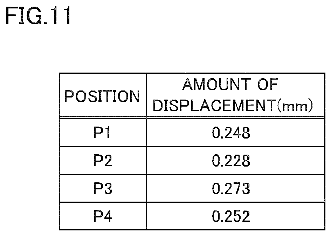

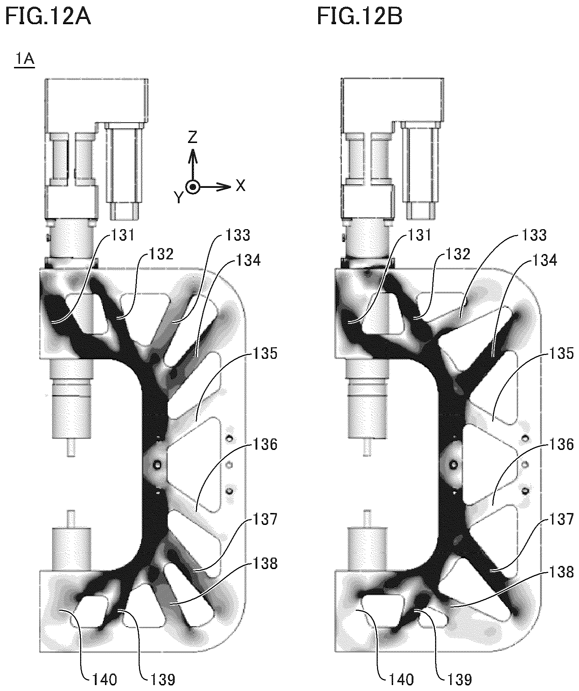

Fig. 5 is a perspective view of a simulation model in Example 1. Figs. 6A to 6F are a six-view drawing of a gun arm in Example 1. Specifically, Figs. 6A to 6F are a front view, a rear view, a left side view, a right side view, a plan view, and a bottom view of the gun arm in Example 1, respectively. Fig. 7 is a perspective view of the gun arm in Example 1. Figs. 8A to 8F are a six-view drawing of a gun arm in Comparative Example 1. Specifically, Figs. 8A to 8F are a front view, a rear view, a left side view, a right side view, a plan view, and a bottom view of the gun arm in Comparative Example 1, respectively. Fig. 9 is a perspective view of the gun arm in Comparative Example 1. Fig. 10A is a front view showing distribution of displacement in the gun arm in Example 1. Fig. 10B is a front view showing distribution of displacement in the gun arm in Comparative Example 1. Fig. 11 shows a table showing absolute values of amounts of displacement at positions in Figs. 10A and 10B of the gun arm in each of Example 1 and Comparative Example 1. Fig. 12A is a front view showing distribution of stress in the gun arm in Example 1. Fig. 12B is a front view showing distribution of stress in the gun arm in Comparative Example 1. Figs. 10A and 10B show increase in amount of displacement by gradation from white to black. Figs. 12A and 12B show increase in stress by gradation from white to black.

As shown in Figs. 5 to 7, Example 1 is a simulation model approximately corresponding to gun arm 100, first joining unit 10, and second joining unit 20 included in joining apparatus 1A according to the embodiment described above. Specifically, gun arm 100 in Example 1 is substantially similar in arrangement of the plurality of beams 130 to gun arm 100 in the first embodiment and it is different in simplified geometry or the like of gun arm 100.

As shown in Figs. 8A to 8F and 9, Comparative Example 1 is different from Example 1 only in configuration of the gun arm. Specifically, the plurality of beams 130 of gun arm 100 in Comparative Example 1 connect inner frame portion 110 and outer frame portion 120 to each other like what is called a Warren truss. Gun arm 100 in Example 1 and gun arm 100 in Comparative Example 1 are equal to each other in weight.

Simulation analysis conditions are that a length dimension in the X-axis direction of gun arm 100 is 580 mm, a length dimension in the Y-axis direction is 150 mm, a length dimension in the Z-axis direction is 1080 mm, a material for gun arm 100 is A2017, and the number of elements is set to approximately 800000. In addition, in each of an area of an inner peripheral surface of gun arm 100 where second joining unit 20 is located and an area of an outer peripheral surface of gun arm 100 where first joining unit 10 is located, a surface load of 70 kN outward in the Z-axis direction is set (see an area AR and a load F in Fig. 5). Furthermore, a constraint condition is that all of six degrees of freedom at six locations (see a reference R in Fig. 5) located at the center in the Z-axis direction of gun arm 100 are "fixed."

It was found as a result of simulation analysis that an amount of displacement in Example 1 was generally smaller than an amount of displacement in the comparative example as shown in Figs. 10A and 10B. In addition, it was found that the amounts of displacement at a position P1 of first joining unit 10 and a position P2 of second joining unit 20 in Example 1 were smaller than the amounts of displacement at a position P3 of first joining unit 10 and a position P4 of second joining unit 20 in Comparative Example 1, respectively, as shown in Fig. 11.

It was thus found that, with the configuration like gun arm 100 in the present embodiment, the gun arm which was less likely to deflect and enhanced in rigidity could be provided.

As shown in Figs. 12A and 12B, in each of Example 1 and Comparative Example 1, high stress is distributed in inner frame portion 110 and stress generally decreases from inner frame portion 110 toward outer frame portion 120.

With attention being paid to distribution of stress in beams 130, in Example 1, stress is distributed in adjacent beams 130 in a well balanced manner (see, in particular, beams 133 and 134 or the like in Example 1). This may be because, owing to the configuration as in Example 1, the plurality of beams 130 substantially radially extend from the vicinity of central portion C of base portion 111 of inner frame portion 110 and consequently the load readily transmits from inner frame portion 110 toward outer frame portion 120.

In Comparative Example 1, on the other hand, high stress is unevenly present in one of adjacent beams 130 (see, in particular, beams 133 and 134 or the like in Comparative Example 1). This may be because, in Comparative Example 1, both of a portion where ends of the plurality of beams 130 on the side of inner frame portion 110 are densely arranged and a portion where ends of the plurality of beams 130 on the side of outer frame portion 120 are densely arranged are provided in gun arm 100 and hence paths for transmission of load from inner frame portion 110 toward outer frame portion 120 are formed in a complicated manner. As set forth above, it is concluded that high stress was generated unevenly in at least one of beams 130, which resulted in large amount of displacement in that beam 130 and great deflection of the entire gun arm in Comparative Example 1.

It was found as above that, with the configuration like gun arm 100 in Example 1, the gun arm which was less likely to deflect and enhanced in rigidity could be provided.

Therefore, with the configuration like gun arm 100 according to the present embodiment and joining apparatus 1A including the same, the gun arm that achieves improvement in rigidity while it achieves reduction in weight and the joining apparatus including the same can be provided.

Though an example where the portion of gun arm 100 surrounded by two beams 130 adjacent to each other among the plurality of beams 130 and inner frame portion 110 and outer frame portion 120 is hole 150 that passes through in the Y-axis direction is illustrated in the present embodiment, instead of the portion provided as hole 150, the portion may be provided with a reinforcement rib smaller in thickness dimension than other portions of gun arm 100. Gun arm 100 reduced in weight can be provided also in this case.

Though an example where each of first joining unit 10 and second joining unit 20 includes the pressurization shaft and the electrode arranged around the pressurization shaft as being located at a distance from the pressurization shaft is illustrated in the present embodiment, the electrode does not necessarily have to be located at a distance from the pressurization shaft, and a circumferential surface of the pressurization shaft may abut on an inner circumferential surface of the electrode.

### (Second Embodiment and Third Embodiment)

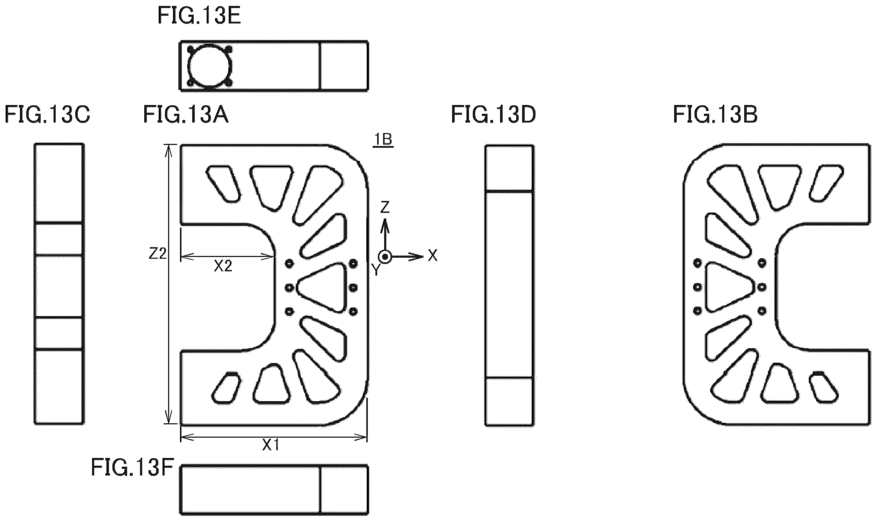

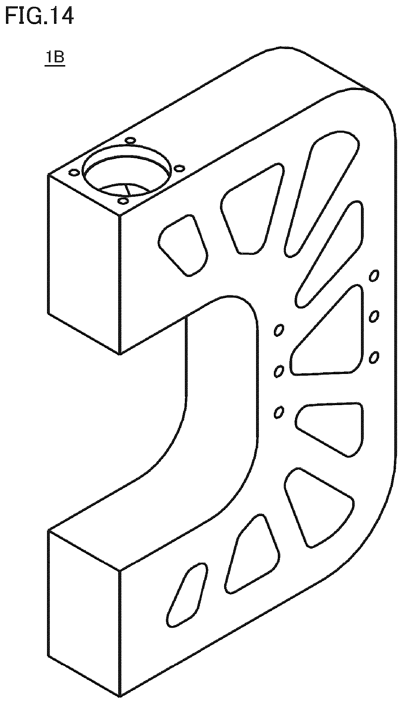

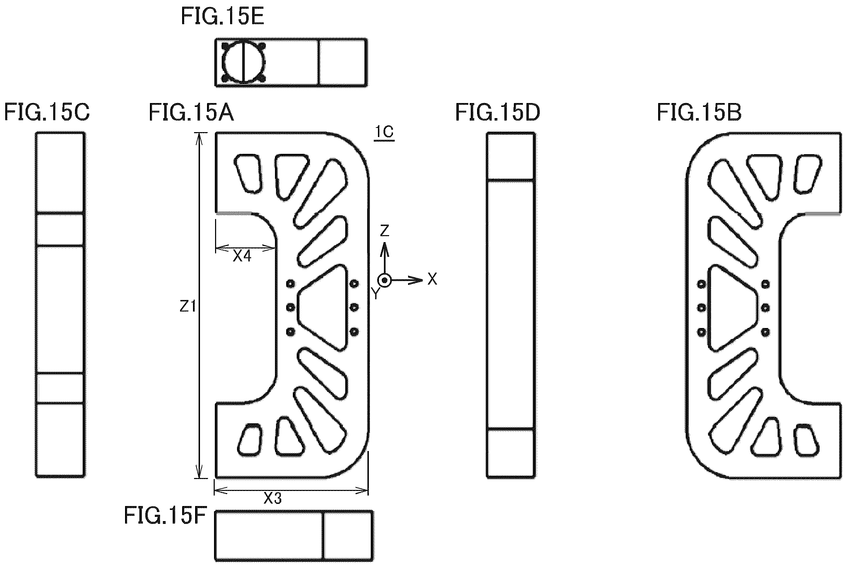

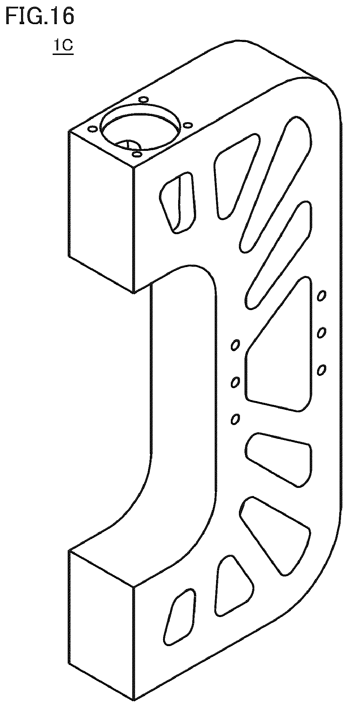

Figs. 13A to 13F are a six-view drawing of a gun arm in Example 2. Specifically, Figs. 13A to 13F are a front view, a rear view, a left side view, a right side view, a plan view, and a bottom view of the gun arm in Example 2, respectively. Fig. 14 is a perspective view of the gun arm in Example 2. Figs. 15A to 15F are a six-view drawing of a gun arm in Example 3. Specifically, Figs. 15A to 15F are a front view, a rear view, a left side view, a right side view, a plan view, and a bottom view of the gun arm in Example 3, respectively. Fig. 16 is a perspective view of the gun arm in Example 3. The gun arm included in a joining apparatus 1B according to a second embodiment and a gun arm included in a joining apparatus 1C according to a third embodiment will now be described with reference to Figs. 13A to 13F, 14, 15A to 15F, and 16. The gun arm in Example 2 includes beams in arrangement substantially in correspondence with arrangement of the beams of the gun arm according to the second embodiment. The gun arm in Example 3 includes beams in arrangement substantially in correspondence with arrangement of the beams of the gun arm according to the third embodiment.

As shown inFigs. 13A to 13F and 14, the gun arm in Example 2 is different from the gun arm in Example 1 described above in that a length (see a dimension Z2 in Fig. 13A) of the entire gun arm along the Z-axis direction is shorter than the length (see a dimension Z1 in Fig. 6A) in Example 1. Dimension Z1 is, for example, not smaller than 880 mm and not larger than 1080 mm. Dimension Z2 is, for example, not smaller than 680 mm and not larger than 880 mm.

As shown in Figs. 15A to 15F and 16, the gun arm in Example 3 is different from the gun arm in Example 1 in that a length (see a dimension X3 in Fig. 15A) of the entire gun arm along the X-axis direction is shorter than the length (see a dimension X1 in Fig. 6A) in Example 1. In addition, a distance (see a dimension X4 in Fig. 15A) between the tip end of the first extension portion and the base portion along the X-axis direction is shorter than the distance (see a dimension X2 in Fig. 6A) in Example 1. Dimension X1 is, for example, not smaller than 500 mm and not larger than 600 mm. Dimension X2 is, for example, not smaller than 250 mm and not larger than 350 mm. Dimension X3 is, for example, not smaller than 400 mm and not larger than 500 mm. Dimension X4 is, for example, not smaller than 150 mm and not larger than 250 mm.

An effect similar to the effect explained in the first embodiment described above is obtained also in the configuration of joining apparatuses 1B and 1C according to the second and third embodiments including the beams in arrangement substantially in correspondence with arrangement of the beams in the gun arms in these Examples 2 and 3, and the gun arm that achieves improvement in rigidity while it achieves reduction in weight and the joining apparatus including the same can be provided.

### (Fourth Embodiment)

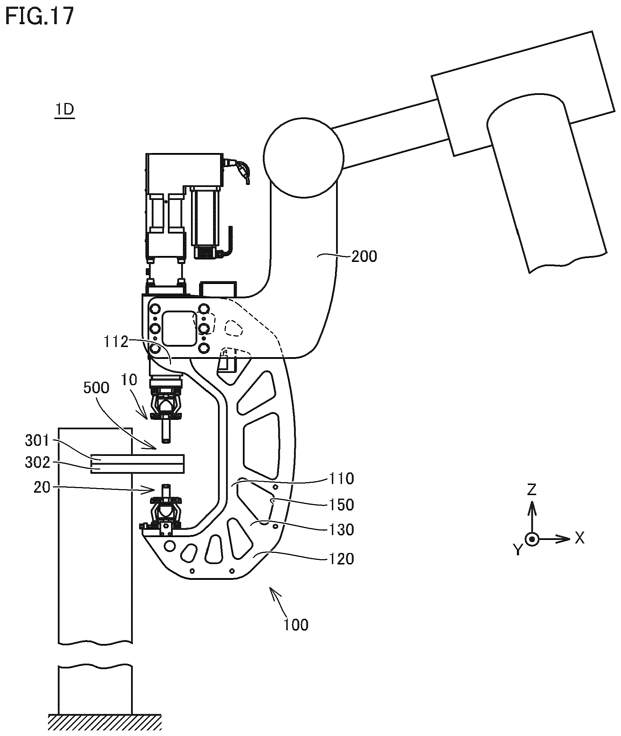

Fig. 17 is a schematic diagram generally showing a joining apparatus according to a fourth embodiment. A joining apparatus 1D according to the fourth embodiment will now be described with reference to Fig. 17.

As shown in Fig. 17, joining apparatus 1D according to the fourth embodiment is different from joining apparatus 1A according to the first embodiment described above in position of a portion of gun arm 100 to which the end effector of robot arm 200 is coupled.

Specifically, in joining apparatus 1D, the end effector is coupled to first extension portion 112 of inner frame portion 110, a portion of outer frame portion 120 opposed to first extension portion 112, and a portion of beams 130 that connect them to each other.

According to such a configuration as well, an effect similar to the effect explained in the first embodiment described above is obtained, and the gun arm that achieves improvement in rigidity while it achieves reduction in weight and the joining apparatus including the same can be provided.

### (Additional Aspects)

Characteristic features of the gun arm and the joining apparatus including the same disclosed in the embodiments described above are summarized as below.

### [Additional Aspect 1]

A gun arm to which a first joining unit and a second joining unit are attachable as being opposed to each other in a first direction, the first joining unit and the second joining unit being configured to press a plurality of overlaid objects to be joined as sandwiching the objects therebetween, the gun arm includes
an inner frame portion that defines an inner peripheral portion,
an outer frame portion that defines an outer peripheral portion, and
a plurality of beams that connect the inner frame portion and the outer frame portion to each other,
the inner frame portion includes
   a base portion that extends along the first direction,
   a first extension portion that extends from one end in the first direction of the base portion, along a second direction intersecting with the first direction, and
   a second extension portion that extends along the second direction from the other end in the first direction of the base portion, the second extension portion being arranged as being opposed to the first extension portion at a distance in the first direction,
when viewed from a third direction orthogonal to the first direction and the second direction, each of the plurality of beams extends away in the first direction from a central portion of the base portion in the first direction, from a side of the inner frame portion toward the outer frame portion, and
when viewed from the third direction, an angle of an acute angle formed by a direction of extension of each of the plurality of beams with respect to the beam portion is smaller as an intersection between the direction of extension and the base portion is more distant from the central portion in the first direction.

### [Additional Aspect 2]

In the gun arm described in Additional Aspect 1,
a portion surrounded by two beams adjacent to each other among the plurality of beams and the inner frame portion and the outer frame portion is a hole that passes through in the third direction.

### [Additional Aspect 3]

In the gun arm described in Additional Aspect 1 or 2,
when viewed from the third direction, the plurality of beams increase in thickness from the side of the inner frame portion toward the outer frame portion.

### [Additional Aspect 4]

In the gun arm described in any one of Additional Aspects 1 to 3,
a robot arm is coupled at a center in the first direction.

### [Additional Aspect 5]

A joining apparatus includes
the gun arm described in any one of Additional Aspects 1 to 4, and
the first joining unit and the second joining unit.

### [Additional Aspect 6]

The joining apparatus described in Additional Aspect 5 is to be used for solid-phase resistance spot joining.

### [Additional Aspect 7]

In the joining apparatus described in Additional Aspect 5 or 6,
the first joining unit includes
   a first pressurization shaft that presses the plurality of objects to be joined in a plastically deformable manner, and
   a first electrode arranged around the first pressurization shaft and applying a voltage to the plurality of objects to be joined, and
the second joining unit includes
   a second pressurization shaft that presses the plurality of objects to be joined in a plastically deformable manner, and
   a second electrode arranged around the second pressurization shaft and
applying a voltage to the plurality of objects to be joined.

### (Other Forms etc.)

Though an example where the present invention is applied to the gun arm to be used for solid-phase resistance spot joining and the joining apparatus including the same is illustrated and described in the embodiment above, the present invention is naturally applicable also to a gun arm to be used for friction stir welding, clinching, self-piercing riveting, resistance spot welding, projection welding, seam welding, and the like and a joining apparatus including the same.

A shape, a configuration, a size, the number, a material, or the like of portions shown in the embodiments described above can variously be modified without departing from the gist of the present invention.

Furthermore, characteristic features shown in the embodiments described above can naturally be combined within the scope not departing from the gist of the present invention.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. A gun arm to which a first joining unit (10) and a second joining unit (20) are attachable as being opposed to each other in a first direction, the first joining unit and the second joining unit being configured to press a plurality of overlaid objects to be joined as sandwiching the objects between the first joining unit and the second joining unit, the gun arm comprising:
an inner frame portion (110) that defines an inner peripheral portion;
an outer frame portion (120) that defines an outer peripheral portion; and
a plurality of beams (131 to 140) that connect the inner frame portion (110) and the outer frame portion (120) to each other, wherein
the inner frame portion (110) includes
a base portion (111) that extends along the first direction,
a first extension portion (112) that extends from one end (111a) in the first direction of the base portion (111), along a second direction intersecting with the first direction, and
a second extension portion (113) that extends along the second direction from the other end (111b) in the first direction of the base portion (111), the second extension portion (113) being arranged as being opposed to the first extension portion (112) at a distance in the first direction,
when viewed from a third direction orthogonal to the first direction and the second direction, each of the plurality of beams (131 to 140) extends away in the first direction from a central portion (C) of the base portion (111) in the first direction, from a side of the inner frame portion (110) toward the outer frame portion (120), and
when viewed from the third direction, an angle of an acute angle formed by a direction of extension of each of the plurality of beams (131 to 140) with respect to the base portion (111) is smaller as an intersection between the direction of extension and the base portion (111) is more distant from the central portion (C) in the first direction.

2. The gun arm according to claim 1, wherein
a portion surrounded by two beams adjacent to each other among the plurality of beams (131 to 140) and the inner frame portion (110) and the outer frame portion (120) is a hole (150) that passes through in the third direction.

3. The gun arm according to claim 1 or 2, wherein
when viewed from the third direction, the plurality of beams (131 to 140) increase in thickness from the side of the inner frame portion (110) toward the outer frame portion (120).

4. The gun arm according to any one of claims 1 to 3, wherein
a robot arm (200) is coupled at a center in the first direction.

5. A joining apparatus comprising:
the gun arm according to any one of claims 1 to 4; and
the first joining unit (10) and the second joining unit (20).

6. The joining apparatus according to claim 5, being used for solid-phase resistance spot joining.

7. The joining apparatus according to claim 5 or 6, wherein
the first joining unit (10) includes
a first pressurization shaft (11) that presses the plurality of objects to be joined in a plastically deformable manner, and
a first electrode (12) arranged around the first pressurization shaft (11) and applying a voltage to the plurality of objects to be joined, and
the second joining unit (20) includes
a second pressurization shaft (21) that presses the plurality of objects to be joined in a plastically deformable manner, and
a second electrode (22) arranged around the second pressurization shaft (21) and applying a voltage to the plurality of objects to be joined.
